Europäisches Patentamt

European Patent Office

Office européen des brevets

(11) Veröffentlichungsnummer: **0 017 609**
**B1**

# EUROPÄISCHE PATENTSCHRIFT

(45) Veröffentlichungstag der Patentschrift:
**20.07.83**

(21) Anmeldenummer: **80730022.3**

(22) Anmeldetag: **13.03.80**

(51) Int. Cl.³: **H 01 B 7/34,** G 02 B 5/16,
C 08 K 5/00, C 08 L 31/04

(54) **Kunststoffisoliertes elektrisches oder optisches Kabel mit flammwidrigem Innenmantel.**

(30) Priorität: **10.04.79 DE 2915188**

(43) Veröffentlichungstag der Anmeldung:
**15.10.80 Patentblatt 80/21**

(45) Bekanntmachung des Hinweises auf die Patenterteilung:
**20.07.83 Patentblatt 83/29**

(84) Benannte Vertragsstaaten:
**AT CH FR GB IT SE**

(56) Entgegenhaltungen:
**BE-A-868 828**
**DE-A-1 690 149**

**CHEMICAL ABSTRACTS, Band 90, Nr. 2, Januar 1979,**
**Seite 74, Nr. 7706b Columbus, Ohio, USA**

(73) Patentinhaber: **SIEMENS AKTIENGESELLSCHAFT,**
**Berlin und München Wittelsbacherplatz 2,**
**D-8000 München 2 (DE)**

(72) Erfinder: **Alt, Dieter, Buchbergstrasse 16, D-8630 Coburg**
**(DE)**
Erfinder: **Hutschgau, Klaus-Dieter, Schlesische**
**Strasse 1, D-8632 Neustadt (DE)**
Erfinder: **Schillmöller, Arnold, Dr., Kantstrasse 16,**
**D-8630 Coburg (DE)**
Erfinder: **Fischer, Bernd, Freytagweg 16,**
**D-8632 Neustadt (DE)**

Kunststoffisoliertes elektrisches oder optisches Kabel mit flammwidrigem Innenmantel

1. Anwendungsgebiet der Erfindung

Die Erfindung liegt auf dem Gebiet der kunststoffisolierten elektrischen oder optischen Kabel und behandelt die konstruktive und werkstofftechnische Ausgestaltung derartiger Kabel im Hinblick auf Hitzebeständigkeit und Flammwidrigkeit.

2. Technischer Hintergrund

An kunststoffisolierte elektrische Kabel wird in zunehmendem Mass die Forderung gestellt, auch unter Hitzeeinwirkung, insbesondere bei Bränden, funktionsfähig zu bleiben, gegebenenfalls nur über einen bestimmten Zeitraum. Der konstruktive Aufbau der Kabel und/oder die Auswahl der Werkstoffe sind dieser Forderung anzupassen. Diese Anpassung sieht bei bekannten Kabelkonstruktionen einen separaten oder einen integrierten Flammschutz vor, indem zusätzliche Konstruktionselemente im Kabelaufbau verwendet, die Isolier- und/oder Mantelwerkstoffe mit geeigneten Additiven angereichert und/oder spezielle Werkstoffe eingesetzt werden. So ist es bekannt, zwischen der Kabelseele eines mehradrigen elektrischen Kabels und dem Kabelmantel eine flammwidrige Zwischenschicht anzuordnen, die aus mit chloriertem Naphthalin getränkten Textilbändern, glatten oder gekreppten Papierbändern oder Faserstoffen besteht (DE-OS 1 690 149). Eine andere bekannte Kabelkonstruktion sieht vor, für die Kabelisolierung ein vernetztes und damit temperaturbeständigeres, gegebenenfalls mit einem inerten Mineralfüllstoff angereichertes Polyäthylen oder Äthylencopolymerisat, für den Aussenmantel ein ebenfalls mit einem inerten Mineralfüllstoff angereichertes Äthylenvinylacetat oder eine Mischung aus Äthylenvinylacetat und einem Äthylenpropylencopolymerisat sowie für den Innenmantel ein mit einem inerten Mineralfüllstoff sowie weiteren Additiven angereichertes Homooder Copolymerisat auf Olefinbasis und/oder eine Wärmesperrschicht aus einem aufgesponnenen Metallband oder aus einem wärmebeständigen Kunststoffband einzusetzen (DE-OS 2 801 542).

Weiterhin ist eine im Brandfall raucharme Kabelkonstruktion bekannt, bei der die Adern von einem Kunststoffmantel umgeben sind, der aus einer Mischung aus chlorsulfoniertem Polyäthylen und chloriertem Polyäthylen besteht. Dieser Mischung sind als Additive unter anderem Füllstoffe, ein Vulkanisationsmittel sowie Magnesiumoxid zugegeben, das im Brandfall eine Rauchbildung unterdrückt bzw. teilweise verhindert. Diese bekannte Mantelmischung nimmt im Brandfall eine schwammartige Struktur an und bildet somit im Brandfall einen Wärmeschutz für die Kabelseele (US-PS 3 971 882).

Im übrigen ist für Schaumstoffisolierungen von elektrischen Kabeln eine Kunststoffmischung bekannt, die neben einem Treibmittel in Form von Azodicarbonamid und einem Vernetzungsmittel ein Flammschutzmittel enthält (DE-OS 2 724 454).

An sich sind bereits Überzugsmaterialien bekannt, die unter Brandeinwirkung aufschäumen und die auf Drähte oder ummantelte Kabel aufgebracht werden können. Dabei handelt es sich um lackartige Substanzen, die neben einem Polyester-Harz oder einem Polyester-Latex Füllstoffe wie Pentaerythrit, Cellulose und Stärke, als Katalysator Ammoniumphosphat und als Schäummittel Melamin enthalten («Chemical Abstracts», Vol. 90, 1979, page 74 Ref. No. 7706 b; BE-PS 868 828).

Der Erfindung liegt die Aufgabe zugrunde, ein mehradriges kunststoffisoliertes und kunststoffummanteltes elektrisches oder optisches Kabel zu schaffen, bei dem der Wärmeschutz der von den verseilten Kabeladern gebildeten Kabelseele im Brandfall ausschliesslich durch einen extrudierten Innenmantel gewährleistet ist.

b) Lösung der Aufgabe

Zur Lösung dieser Aufgabe geht die Erfindung von einem Kabel aus (DE-OS 2 801 542), bei dem zwischen den verseilten Adern und dem Aussenmantel ein extrudierter Innenmantel aus einem halogenfreien, mit Additiven angereicherten Polymer angeordnet ist. Gemäss der Erfindung ist vorgesehen, dass das Polymermaterial des Innenmantels aus einem Äthylen-Vinylacetat-Copolymer besteht und als Additive einen Füllstoff mit einer grossen Zahl veresterbarer Hydroxylgruppen in einer Menge von 10 bis 50 Gew.-%, einen im Brandfall säureabspaltenden Katalysator in einer Menge von ebenfalls 10 bis 50 Gew.-% und ein stickstoffhaltiges Treibmittel zum Aufschäumen des Innenmantels unter Hitzeeinwirkung in einer Menge von 1 bis 20 Gew.-% enthält.

c) Vorteile

Bei einem derart ausgebildeten Kabel schäumt der extrudierte Innenmantel im Brandfall zu einer wärmedämmenden und feuerhemmenden Schicht auf und unterdrückt dadurch die Weiterleitung des Brandes und schützt die Kabelseele vor der Brandeinwirkung. Die vorgesehene Ausgestaltung des Innenmantels erübrigt einen besonderen Feuerschutz der Kabelseele durch bisher übliche Bespinnungen aus Glasgeweben, Asbestbändern, Metallbändern oder temperaturbeständigen Kunststoffbändern. Das Aufschäumen des Innenmantels im Brandfall ist möglich, weil der äussere Kunststoffmantel durch die Hitzeeinwirkung soweit erweicht, dass er keine bandagenartige Wirkung auf den Innenmantel mehr ausübt.

d) Weitere Ausgestaltungen

Der Innenmantelmischung kann als weiteres Additiv ein Vernetzungsmittel, insbesondere auf der Basis eines Peroxides, beigegeben sein. Dadurch wird im Brandfall nach dem Aufschäumen eine Vernetzung des Innenmantels und damit eine grössere Formstabilität erreicht.

Als Füllstoff mit einer grossen Zahl veresterbarer Hydroxylgruppen wird vorzugsweise Stärke und/oder ein mehrwertiger Alkohol wie beispielsweise Pentaerythrit und/oder ein Zucker wie beispielsweise Mannit eingesetzt. Als Katalysator kommen insbesondere Ammoniumphosphat, Melaminphosphat oder Ammoniumborat in Betracht. Als Treibmittel können Azodicarbonamid oder Benzolsulfhydrazid oder Melamin, Guanidine oder Harnstoff verwendet werden.

Wie erwähnt, wird für den Kunststoffinnenmantel ein halogenfreier Kunststoff verwendet, weil anderseits im Brandfall korrosive Gase entstehen. Es ist sinnvoll, sowohl für die Aderisolierung als auch für den Aussenmantel ebenfalls halogenfreie Kunststoffe einzusetzen. Für die Aderisolierung kommen dabei insbesondere Polyäthylen und Äthylenvinylacetat im thermoplastischen oder vernetzten Zustand in Betracht. Für den Aussenmantel sind insbesondere thermoplastische Kunststoffmischungen auf der Basis von Äthylenvinylacetat, Äthylenäthylacrylatcopolymer, Äthylenpropylencopolymer und Äthylenpropyleterpolymer geeignet.

Zur Stabilisierung des Innenmantels im Brandfall kann dieser als weiteren Füllstoff einen feinteiligen anorganischen Füllstoff mit einer spezifischen Oberfläche von wenigstens 5 m²/g wie Kaolin, Kieselsäure, Aluminiumoxydhydrat oder Talke enthalten.

c) Ausführungsbeispiel

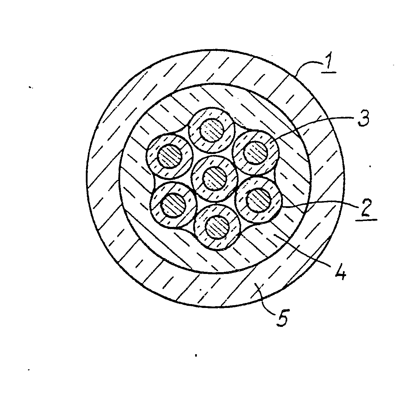

Ein Ausführungsbeispiel des neuen kunststoffisolierten elektrischen Kabels ist in der Figur dargestellt.

Die Figur zeigt ein mehradriges Starkstromkabel 1, dessen kunststoffisolierte Adern 2 eine Isolierung 3 aus vernetztem Polyäthylen tragen. Über den sieben miteinander verseilten Adern 2 befindet sich der extrudierte Innenmantel 4 auf der Basis eines Äthylenvinylacetat-Copolymerisats. Darüber befindet sich der Aussenmantel 5 aus einem Äthylenpropylen-Copolymerisat.

Das Kunststoffmaterial des Innenmantels 4 weist folgende Zusammensetzung auf:
18 Gew.-% Äthylenvinylacetat-Copolymerisat
15 Gew.-% Pentaerythrit
15 Gew.-% Stärke
30 Gew.-% Ammoniumpolyphosphat (phosphorhaltiger Katalysator)
5 Gew.-% Azodicarbonamid
10 Gew.-% Spritzbarmacher
7 Gew.-% anorganischer Füllstoff

Die Mischung des Innenmantels 4 ist so eingestellt, dass sie bei der Herstellung nicht aufschäumt, d.h. der Innenmantel liegt zunächst im nichtaufgeschäumten Zustand vor. Im Brandfall schäumt der Innenmantel infolge des eingesetzten Treibmittels auf, während der Füllstoff eine Kohlenstoffquelle darstellt, die durch Einwirkung des Katalysators zu einer Kohlenstoffbildung führt. Sowohl der Aufschäumvorgang als auch der Vorgang der Kohlenstoffbildung führen zu einer äusserst wirksamen wärmedämmenden und feuerhemmenden Schicht.

Die chemischen Grundlagen derartiger Feuerschutzsysteme sind für Lackanstriche an sich bekannt (Journal Fire & Flammabilty, Vol. 2, April 1971, S. 97–140).

## Patentansprüche

1. Mehradriges kunststoffisoliertes und kunststoffummanteltes elektrisches oder optisches Kabel mit einem zwischen den verseilten Adern und dem Aussenmantel angeordneten extrudierten Innenmantel aus einem halogenfreien, mit Additiven angereicherten Polymer, dadurch gekennzeichnet, dass das Polymermaterial des Innenmantels aus einem Äthylen-Vinylacetat-Copolymer besteht und als Additive
   a) einen Füllstoff mit einer grossen Zahl veresterbarer Hydroxylgruppen in einer Menge von 10 bis 50 Gew.-%,
   b) einen im Brandfall säureabspaltenden Katalysator in einer Menge von ebenfalls 10 bis 50 Gew.-% und
   c) ein stickstoffhaltiges Treibmittel zum Aufschäumen des Innenmantels unter Hitzeeinwirkung in einer Menge von 1 bis 20 Gew.-% enthält.

2. Elektrisches oder optisches Kabel nach Anspruch 1, dadurch gekennzeichnet, dass als Füllstoff Stärke und/oder mehrartige Alkohole, wie beispielsweise Pentaerythrit und/oder Zucker, wie beispielsweise Mannit eingesetzt ist.

3. Elektrisches oder optisches Kabel nach Anspruch 1, dadurch gekennzeichnet, dass als Katalysator Ammoniumphosphat, Melaminphosphat oder Ammoniumborat eingesetzt ist.

4. Elektrisches oder optisches Kabel nach Anspruch 1, dadurch gekennzeichnet, dass als stickstoffhaltiges Treibmittel Azodicarbonamid oder Benzolsulfhydrazid oder Melamin, Guanidine oder Harnstoff verwendet ist.

5. Elektrisches oder optisches Kabel nach einem der Ansprüche 1 bis 4, dadurch gekennzeichnet, dass dem Polymermaterial des Innenmantels als weiteres Additiv ein Vernetzungsmittel beigegeben ist.

6. Elektrisches oder optisches Kabel nach einem der Ansprüche 1 bis 5, dadurch gekennzeichnet, dass dem Polymermaterial des Innenmantels als weiterer Füllstoff ein feinteiliger anorganischer Füllstoff mit einer spezifischen Oberfläche von mehr als 5 m²/g wie Kaolin, Kieselsäure, Aluminiumoxydhydrat oder Talke beigegeben ist.

## Claims

1. Multi-strand synthetic resin-insulated and synthetic resin-coated electrical or optical cable comprising an extruded inner sheath which is made of a halogen-free polymer containing additives, arranged between the twisted strands and the outer sheath, characterised in that the polymeric material of the inner sheath consists of an ethylene-vinyl acetate copolymer and contains as additives:
   a) a filler having a large number of esterifiable hydroxyl groups in an amount of 10 to 50% by weight,

b) a catalyst which splits off acid on combustion also in an amount of 10 to 50% by weight, and

c) a nitrogenous propellant for expanding the inner sheath under the influence of heat in an amount of 1 to 20% by weight.

2. An electrical or optical cable as claimed in Claim 1, characterised in that starch and/or alcohols of many kinds, such as, for example, pentaerythritol, and/or sugar, such as, for example, mannite, are used as fillers.

3. An electrical or optical cable as claimed in Claim 1, characterised in that ammonium phosphate, melamine phosphate, or ammonium borate is used as catalyst.

4. An electrical or optical cable as claimed in Claim 1, characterised in that azodicarbonamide, benzenesulphhydrazide, melamine, guanidine, or urea, is used as the nitrogenous propellant.

5. An electrical or optical cable as claimed in one of Claims 1 to 4, characterised in that a crosslinking agent is added to the polymeric material of the inner sheath as a further additive.

6. An electrical or optical cable as claimed in one of Claims 1 to 5, characterised in that a fine-grained inorganic filler having a specific surface area of more than 5 m²/g, such as kaolin, silicic acid, hydrated aluminium oxide hydrate, or talc, is added to the polymeric material of the inner sheath as a further filler.

## Revendications

1. Câble électrique ou optique multiconducteur, isolé avec de la matière plastique et à gainage en matière plastique, du type comportant entre les conducteurs câblés et la gaine extérieure une gaine intérieure extrudée en un polymère non halogéné, enrichi en additifs, caractérisé par le fait que le matériau polymère de la gaine intérieure est constitué avec un polymère éthylène-acétate de vinyle et contient comme additifs:

a) une substance de remplissage avec un grand nombre de groupes hydroxy estérifiables, en une quantité de 10 à 50% en poids,

b) un catalyseur décomposant l'acide en cas d'incendie, en une quantité également de 10 à 50% en poids, et

c) un agent porogène azoté pour faire mousser la gaine intérieure sous l'effet de la chaleur, en une quantité de 1 à 20% en poids.

2. Câble électrique ou optique selon la revendication 1, caractérisé par le fait que l'on met en œuvre, comme substance de remplissage de l'amidon et/ou un polyalcool comme par exemple le pentaérythrite et/ou un sucre, comme par exemple le mannitol.

3. Câble électrique ou optique selon la revendication 1, caractérisé par le fait que l'on met en œuvre, comme catalyseur, le phosphate d'ammonium, le phosphate de mélamine ou le borate d'ammonium.

4. Câble électrique ou optique selon la revendication 1, caractérisé par le fait que l'on utilise, comme agent porogène azoté, l'azodicarbonamide ou le benzolsulfhydrazine ou la mélamine, la guanidine et l'urée.

5. Câble électrique ou optique selon l'une des revendications 1 à 4, caractérisé par le fait qu'on ajoute au matériau polymère de la gaine intérieure, un agent de réticulation comme additif supplémentaire.

6. Câble électrique ou optique selon l'une des revendications 1 à 5, caractérisé par le fait qu'on ajoute au matériau polymère de la gaine intérieure, comme substance de remplissage supplémentaire, une substance de remplissage anorganique finement divisée, ayant une surface spécifique de plus de 5 m²/g, comme le kaolin, l'acide silicique, l'oxyhydrate d'aluminium ou du talc.